# EUROPEAN PATENT SPECIFICATION

(11) **EP 2 529 825 B1**
(45) Date of publication and mention of the grant of the patent: **11.03.2015**
(21) Application number: 11168484.1
(22) Date of filing: 01.06.2011
(51) Int. Cl.: B01D 53/62

(54) **CO2 capture with carbonate looping**
CO2-Erfassung mit Karbonatschleife
Capture de CO2 avec bouclage de carbonate

(43) Date of publication of application: 05.12.2012
(73) Proprietor: ALSTOM Technology Ltd, 5400 Baden (CH)
(72) Inventor: Agostinelli, Gian-Luigi, 8048 Zurich (CH); Carroni, Richard, 5443 Niederrohrdorf (CH); Koss, Peter Ulrich, 8702 Zollikon (CH); Heinz, Gerhard, 73732 Esslingen (DE)

(56) References cited:
- EP-A1- 2 305 366
- WO-A1-2010/137995
- WO-A1-2011/047409
- WO-A2-2006/113673
- CN-B- 101 539 037
- US-A1- 2004 237 404

## Description

### Field of Invention

The present invention relates to CO₂ capturing in a gas turbine based power plant wherein a carbonate looping process has been connected.

### Background of Invention

There is a general aim to capture the CO₂ in gases generated in gas turbine based power generation system to make the process more environmentally friendly and to reduce the effect of global warming. The captured CO₂ gas may then be compressed and transported to be stored in a suitable place, for example in deep geological formations O deep ocean masses. There are several technologies known to remove CO₂ from the flue gas generated such as by absorption, adsorption, membrane separation, and cryogenic separation.

When generating power in gas turbine based power generation including a combined cycle power plant (CCPP) and a unit for carbon capture and storage (CCS) the most common way for capturing the CO₂ is by so-called wet chemistry, wherein the CO₂ gas is captured by adsorption to a chemical or physical solvent in an aqueous solution. The process is a wet chemistry post-combustion capture taking place in a CCPP.

However, there is an aim to improve the CO₂ capturing process as the amount of captured CO₂ is reduced when comparing to the effort put into the system to remove the gas. In a conventional CCPP the concentration of CO2 is normally only about 4 percent by volume. The CO₂ capture unit for a conventional CCPP will be more costly and energy consuming per kg of captured CO₂ than the ones for other types of fossil power plants, like coal fired plants, which have a relatively higher CO₂ concentration. Also, the methods previously used require regeneration of the included components, like the solvent. These regeneration processes are time and energy consuming. Therefore the overall energy production of the system is reduced.

A process for capturing CO₂ by a dry process is known from EP 1199444 A1. The process described herein is also called a carbonate looping process. However, the process described herein is used for capturing CO₂ generated in a plant for in connection with a coal power plant.

CN 101 539 037 B discloses a concept for CO₂ capturing in a gas turbine based power generation system comprising a combined cycle power plant and a carbonate capture unit comprising a first reactor able to capture the CO₂ present in the flue gas and a second reactor arranged to release CO₂ by decarbonation of the carbonate at elevated temperature.

### Summary of Invention

According to aspects illustrated herein there is provided a system and a method for CO2 capturing by which the energy consumption of the gas turbine based power generation system is reduced.

According to aspects illustrated herein, there is provided a system for CO₂ capturing in a gas turbine based power generation system, comprising a combined cycle power plant (CCPP), comprising one or more gas turbines; a carbonate looping unit for CO₂ capturing comprising
a first reactor comprising solid material able to capture the CO₂ present in the flue gas comprising CO₂, such that metal carbonate is formed by carbonation;
a second reactor arranged to release CO₂ by decarbonation of metal carbonate at elevated temperature.

The gas turbine based power generation system comprising the carbonate looping unit for CO₂ capturing as herein described further comprise a heat recovery steam generator (HRSG) which may be arranged downstream the first reactor 20 to receive and recover heat therefrom.

According to an embodiment of gas turbine based power generation system may also comprise a heat recovery steam generator (HRSG) arranged downstream a gas turbine of the CCPP to receive and recover heat therefrom. The system may also optionally comprise a flue gas recirculation (FGR) arranged downstream the HRGS.

Also, the system for CO₂ capturing may comprise a heat recovery steam generator (HRSG) is arranged to receive and recover heat from the first reactor. This is advantageously as reaction taking place in the first reactor is exotermic and shall be kept at a constant temperature between 400 and 800 °C. Therefore additional steam is generated which can be used for various applications for power generation, for example a heat recovery steam generator (HRSG). The steam may also be used for heating the O₂ gas introduced in the second reactor.

The system for CO₂ capturing may also include means where parts of the CO₂ stream from the second reactor is recycled, after cooling, to the inlet of the gas turbine power generation system.

By the recycling of the CO₂ stream the O₂, if present, may be re-used in the gas turbine power generation system. Another advantage achieved by the recycling of the CO₂ stream is an increased CO₂ partial pressure, preferably to an optimal level in the first reactor which is working under atmospheric conditions.

Also, the system for CO₂ capturing according to the invention may comprise a flue gas recirculation (FGR) unit combined with the gas turbine based power generation system by that parts of the flue gas from the gas turbine (GT) are recirculated, optionally after cooling, to the inlet of the gas turbine. An advantage achieved with this embodiment is an increased concentration of CO₂. If the partial pressure of CO₂ is increased, lower energy input is required and also, advantageously, a lower operating costs. Further, if lower volumes of flue gas may be used when operating the gas turbine power plants, also smaller dimensions of the first reactor is required and also reduction of cost for equipment.

The gas turbine in the gas turbine based power generation system of the invention may be a non-reheated gas turbine. Another option of gas turbine which may be included in the gas turbine power plant system of the invention is a reheat gas turbine.

According to other aspects illustrated herein, there is provided a method for capturing CO₂ in a gas turbine based power generation system, comprising
bringing the flue gas comprising CO₂ into contact with solid material able to capture the CO₂ present in the flue gas, such that metal carbonate such as CaCO₃ is formed by carbonation; and
releasing the CO₂ by decarbonation of the metal carbonate at elevated temperature in the second reactor.

In an embodiment of the invention method for capturing CO₂ is wherein the solid material captures the CO₂ by adsorbing or absorbing. Further the method comprises a solid material which is in form of powder or small particles. Preferably the solid material is a metal oxide such as calcium oxide (CaO).

In an embodiment of the invention the method for capturing CO₂ includes to bring the CO₂ to solid material having a temperature of between 400 and 800 °C, preferably between 600 and 700°C, more preferably 650 °C. The releasing of CO₂ takes place at temperature of about 900 °C in the second reactor. Also, the heat obtained from the first reactor may be received and recoved by a heat recovery steam generator (HRSG). The reaction taking place in the first reactor is exotermic and shall be kept at a constant temperature between 400 and 800 °C. Therefore additional steam is generated which can be used for various applications for power generation, for example a heat recovery steam generator (HRSG).

It has been shown that to combine the CCPP and the carbonate looping unit the system shows surprisingly good economical advantages as the CCPP generates gases having temperatures of the flue fases as is required for the reaction in the first reactor. Thus, no or at least reduced amount of energy is required to be added to the system for an efficient reaction.

The method for capturing CO₂ may be performed where the flue gas comprising CO₂ is brought into contact with solid material at atmospheric pressure. An alternative is a method wherein flue gas comprising CO₂ is brought into contact with solid material at increased pressure. By using an increased pressure for the step wherein the flue gas comprising CO₂ is brought into contact with the solid material for adsorbing or absorbing of the CO₂, the partial pressure of CO₂ is increased and the volumetric flow is reduced and thereby also the equipment size is reduced.

When the adsorption or absorption of the CO₂ from the flue gas takes place at increased pressure a gas turbine acting with reheat may be used, as well as a non-heated gas turbine system.

The above described and other features are exemplified by the following figures and detailed description.

### Brief description of the drawings

Referring now to the figures, which are exemplary embodiments, and wherein the like elements are numbered alike:
Figure 1 is illustrating a gas turbine based power generation system having a CO₂ capturing system.
Figure 2 is illustrating a variant of the gas turbine based power generation system.
Figure 3 is illustrating a further variant of the gas turbine based power generation system.

### Detailed description of preferred embodiments

The gas turbine based power generation system, wherein the system for capturing CO₂ as described above may be used, comprises a conventional combined cycle power plant (CCPP), optionally together with one or more heat recovery steam generators (HRSG), and optionally together with a system for flue gas recirculation (FRG).

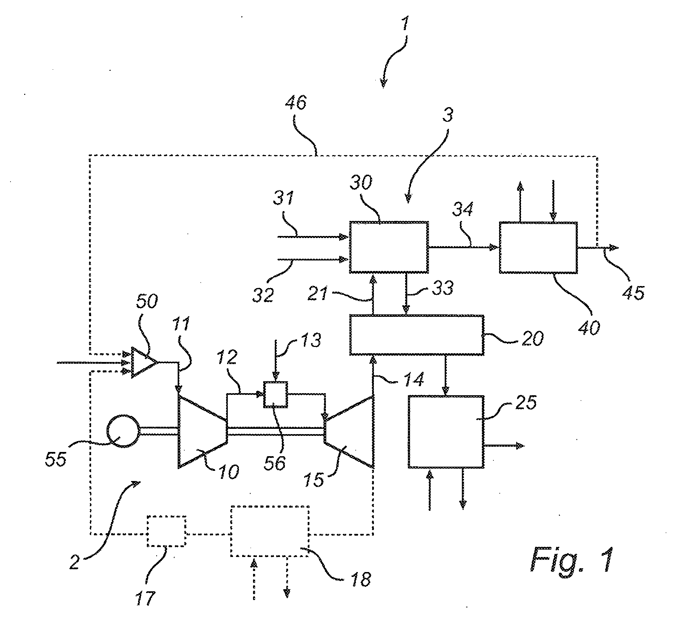

An embodiment of the gas turbine power generation system of the invention is illustrated in fig 1.

The gas turbine based power generation system 1 comprises a combined cycle power plant CCPP 2, including a compressor 10 which is feeded with ambient air via duct 11. A gas turbine 15 is supplied with the compressor outlet gas 12 and with energy obtained from the combustor 56 feeded with fuel via 13. The outlet gas from the gas turbine 15, comprising CO2 is forwarded to the first reactor 20, via duct 14.

The CO2 is captured in the first reactor 20 by adsorbing or absorbing of the gas to the solid material. The solid material is typically in form of powder or of small particles. Examples of solid material are metal oxides for example calcium oxide, CaO.

By the form of powder or of small particles it is provided a way to increase the mass transfer rate from gas to solid and by that reduce the reaction time.

The first reactor 20 is operating in a temperature interval between 400 to 800°C, preferably at a temperature between 600 and 700°C, for example about 650 °C. By the process taking place in the first reactor 20 a metal carbonate is produced. When calcium oxide (CaO) is used, CaCO₃ is formed in the first reactor.

The carbonate is then transferred to the second reactor 30 for decarbonation at elevated temperature. Typically, the reaction in the second reactor 30 is taking place at about 900 °C when CaC03 is decarbonated.

The second reactor 30 is feeded with O₂ via duct 31. The second reactor is also feeded with fuel via duct 32 for keeping the determined high temperature. The second reactor may be heated by fuels like natural gas, biomass, coal etc. Also this heating process is generating CO₂ which may be captured. The reaction, thus the decarbonation wherein CO₂ is produced, taking place in the second reactor produces some solid residues, such as ash mixed with fines of metal oxide, for example fines of CaO, when the fuel used is biomass or coal. When the second reactor is heated with natural gas the solid residues comprises CaO fines only. The solid residues may be further processed and/or reused for industrial application, for example cement industry. Some of the solid material is transferred back via the duct 33 to the first reactor for being reused.

The reaction taking place in the first reactor 20 is exothermic. Further, the temperature selected is typically kept constant during operation which results in heat generated which may be used in other parts of the gas turbine power plant, for example, in a heat recovery steam generator (HRSG) 25.

A CO₂ capturing method using carbonation and decarbonation is further described in EP 1193444 A1.

The heat may also be used for heating the O₂ gas before introduced into the second reactor 30, via duct 31. By that the amount of fuel needed for heating the second reactor is reduced. Also the size of the equipment for generation the O₂ may be reduced by these means.

The captured CO₂ gas obtained in the second reactor 30 is forwarded via duct 34 for cooling, for example to a temperature of near ambient, in a cooling unit 40, the cooling heat can be recuperated into the water steam cycle (WSC) to increase the steam turbine output.

The cooled CO₂ gas captured is then forwarded for compression, and further processing, via duct 45.

The method for capturing CO₂ capturing may also include recycling of parts of the CO₂ stream from the second reactor, after cooling, to the inlet of the gas turbine power generation system.

By the recycling of the CO₂ stream the O₂, if present, may be re-used in the gas turbine power generation system.

Another advantage achieved by the recycling of the CO₂ stream is an increased CO₂ partial pressure, preferably to an optimal level in the first reactor which is working under atmospheric conditions.

Optionally part of the flue gases at the exhaust of turbine 15 can be recirculated into the gas turbine air intake duct 11 and mixed with fresh air in a mixing device 50 upstream. The system is named Flue Gas Recurculation (FGR) and comprises a heat recovery steam generator (HRSG) 18 that is placed first downstream the gas turbine 15 to recuperate the heat and a flue gas cooler 17 that cools down the flue gas before mixing into mixer 50 . The heat in 18 may be recovered into a water steam cycle (WSC) connected to the HRSG 18 to increase the power of the steam turbine. The water steam cycle (WSC) recuperates the heat from process streams generating steam that is expanded into steam turbine to generate power.

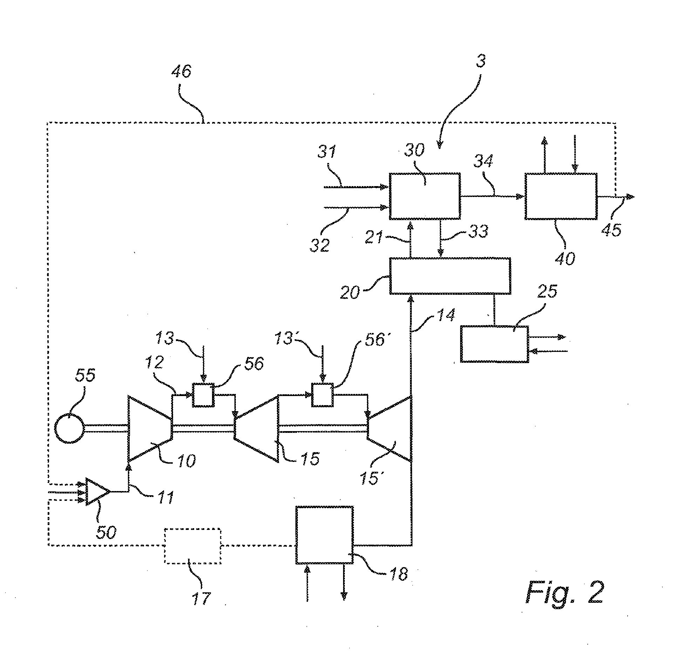

The CCPP 2 shown in fig. 2 is based on a reheat gas turbine optionally comprising a flue gas recirculation (FGR) downstream the gas turbine 15 with HRSG 18 and flue gas cooler 17 before mixing into device 50.

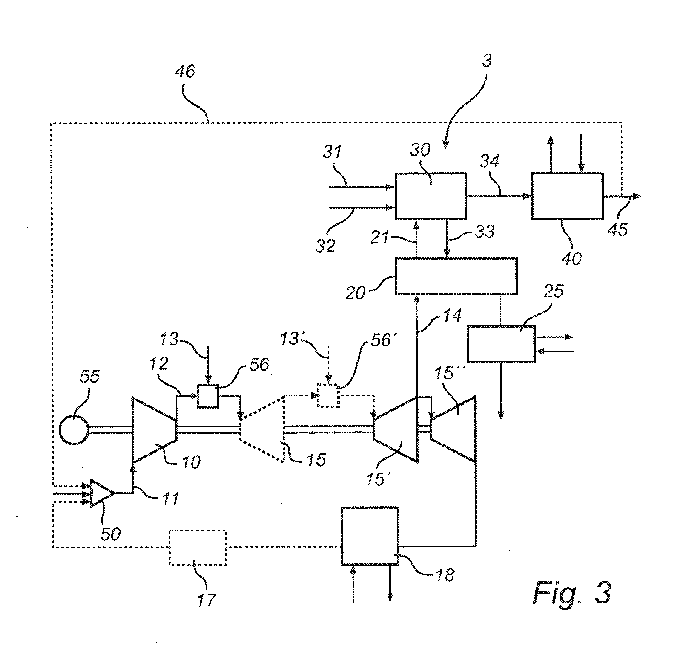

In fig. 3 it is shown a gas turbine based power generation system 1 comprising a combined cycle power plant CCPP 2, comprising multiple turbines, a CO2 capture unit 3, comprising the first reactor 20 and the second reactor 30, and a heat recovery steam generator (HRSG) 25.

An extraction of flue gases is made along the expansion of the gas and this extraction then feeds the item 20, the first reactor. In an embodiment of the invention the item 20, the first reactor, is fed with flue gases extracted, not at the end of expansion, but in the intermediate phase of such an extraction by arranging two turbine modules, one with lower pressure, one or more with higher pressure, and extraction takes place between two modules. In this "inter-turbine" arrangement, parts of the flue gas comprising CO₂ for capturing in the carbonate looping is forwarded from this extraction so that the flue gas is processed in reactor 20 at pressure higher than "atmospheric" one being such flue gas delivered via duct 14. By that, the carbonate looping, i.e. the CO₂ capture unit, is operating at higher pressure compared to exhaust pressure of last expansion turbine module. Referring to Figure 3 the extraction is made after turbine module 15'.

The CO2 depleted flue gas existing the item 20 is then further expanded in a turbine module 16.

In figure 3 the combined cycle power plant (CCPP) shows a gas turbine arrangement with several turbines modules, items 15, 15', 15", 16 being turbine modules where mechanical power is generated to drive one or more generators. In figure 3 expansion module 16 is connected to a separate generator 55'.

A portion of the flue gas leaving the turbine 15' is transferred to the CO₂ capture unit via the duct 14. The unit is operating at high pressure and is located between the two expansion turbines 15' and 15". In the CO₂ capturing unit the gas is first entering the first reactor 20 for adsorbing or absorbing of the CO₂ onto the CaO present in the first reactor to form calcium carbonate (CaCO₃). The temperature of the first reactor is kept at about 650 °C.

The formed calcium carbonate, CaCO₃, is transferred to the second reactor 30 wherein a decarbonation at elevated temperature of about 900 °C is preformed, by that CO₂ is released. The CO₂ is cooled in the cooling unit 40 before it is transferred for further processing, such as compression, via duct 45. Item 40 may also be connected to a water steam cycle or for heat recovering by, for example, thermal integration.

Some of the CaO formed in the second reactor 30 is transferred back to the first reactor via duct 33 for being reused in the first reactor 20.

The captured CO₂ gas obtained in the second reactor is forwarded via duct 34 for cooling, for example to a temperature of near ambient, in a cooling system 40. The cooled CO₂ gas captured is the forwarded for compression, and further processing, via duct 45.

Optionally part of the flue gases at the exhaust of turbine 15 can be recirculated into the gas turbine air intake duct 11 and mixed with fresh air in a mixing device 50 upstream. The system is named Flue Gas Recurculation (FGR) and comprises a heat recovery steam generator (HRSG) 18 that is placed first downstream the gas turbine 15 to recuperate the heat and a flue gas cooler 17 that cools down the flue gas before mixing into mixer 50 . The heat in 18 may be recovered into a water steam cycle (WSC) connected to the HRGS 18 to increase the power of the steam turbine.

The water steam cycle (WSC) recuperates the heat from process streams generating steam that is expanded into steam turbine to generate power: items 40, 25 and 18 recuperate heat from process streams and produce steam to drive steam turbines to increase plant electrical power output. The steam turbine arrangement and connection to generators and shaft arrangement are not part of the description.

The gas turbine shown in Figure 3 is a reheated gas turbine, the same concept can be applied to a non reheat gas turbine with a single combustor stage (item 56 or 56').

## Claims

1. A system for CO₂ capturing in a gas turbine based power generation system 1, the system comprising a combined cycle power plant 2 and a carbonate looping unit 3 wherein the carbonate looping unit 3 comprises:
a first reactor 20 comprising solid material able to capture the CO₂ present in the flue gas, such that a metal carbonate is formed; and
a second reactor 30 arranged to release CO₂ by decarbonation of the metal carbonate at elevated temperature,
wherein a part of the CO₂ stream from the second reactor 30 is recycled, optionally after cooling, to the inlet of the combined cycle power plant 2.

2. The system for CO₂ capturing according to claim 1, further comprising a heat recovery adapted to be generator (HRSG) 25 which is arranged downstream the first reactor 20 to receive and recover heat therefrom.

3. The system for CO₂ capturing according to any the preceding claims, wherein the first reactor 20 is adapted to be pressurized to a pressure higher than atmospheric pressure.

4. The system for CO₂ capturing according to any the preceding claims, wherein part of the exhaust flue gas downstream turbine 15 is recirculated into the gas turbine air intake and mixed in device 10, a heat recovery steam generator (HRSG) 18 is arranged upstream in such recirculation to recover heat therefrom, and a flue gas cooler 17 is arranged downstream the HRSG 18.

5. The system for CO₂ capturing according to claim 1 wherein the solid material capture the CO₂ by adsorbing or absorbing.

6. The system for CO₂ capturing according to any of preceding claims wherein the solid material is in form of powder or particulate form.

7. The system for CO₂ capturing according to any of preceding claims wherein the solid material is calcium oxide (CaO).

8. The system for CO₂ capturing according to any of preceding claims wherein the reactor is adapted to operate at a temperature of between 400 and 800 °C, preferably between 600 and 700°C, more preferably 650 °C.

9. The system for CO₂ capturing according to any of preceding claims wherein the second reactor is adapted to operate at temperature of about 900 °C.

10. A method for capturing CO₂ in a gas turbine power generation system comprising a combined cycle power plant 2, the method comprising
bringing the flue gas comprising CO₂ into contact with solid material able to capture the CO₂ present in the flue gas, such that metal carbonate is formed by carbonation;
releasing CO₂ by decarbonation at elevated temperature, and
recycling a part of the CO₂ stream, optionally after cooling, to an inlet of the combined cycle power plant.

11. The method for capturing CO₂ according to claim 10 wherein the solid material captures the CO₂ by adsorbing or absorbing.

12. The method for capturing CO₂ according to claim 10 or 11 wherein the solid material is in form of powder or particulate form.

13. The method for capturing CO₂ according to any of preceding claims 10 to 12 wherein the solid material is calcium oxide (CaO).

14. The method for capturing CO₂ according to any of preceding claims 10 to 13 wherein the CO₂ is brought in contact with the solid material at a temperature of between 400 and 800 °C, preferably between 600 and 700°C, more preferably 650 °C.

15. The method for capturing CO₂ according to any of preceding claims 10 to 14 wherein the releasing of CO₂ takes place at temperature of about 900 °C.

16. The method for capturing CO₂ according to any of preceding claims 10 to 15, wherein the bringing the flue gas comprising CO₂ into contact with
solid material is at a pressure higher than atmospheric pressure.

17. The method for capturing CO₂ according to any of preceding claims 10 to 16 further comprising:
recirculating part of the exhaust flue gas downstream turbine 15 of the combined cycle power plant 2 into a gas turbine air intake,
wherein a heat recovery steam generator (HRSG) 18 is arranged upstream in such recirculation to recover heat therefrom, and a flue gas cooler 17 is arranged downstream the HRSG 18.

## Patentansprüche

1. System zur CO₂-Erfassung in einem gasturbinenbasierten Energieerzeugungssystem (1), bei dem das System ein kombiniertes Kraftwerk (2) mit einer Karbonatschleifeneinheit (3) umfasst, wobei die Karbonatschleifeneinheit (3) Folgendes umfasst:
einen ersten Reaktor (20), der Feststoffmaterial umfasst, um das im Rauchgas vorhandene CO₂ so zu erfassen, dass ein Metallkarbonat gebildet wird; und
einen zweiten Reaktor (30), der angeordnet ist, um CO₂ durch Entkarbonisieren des Metallkarbonats bei höherer Temperatur freizusetzen,
wobei ein Teil des CO₂-Stroms aus dem zweiten Reaktor (30), wahlweise nach dem Abkühlen, zum Einlass des kombinierten Kraftwerks (2) rezykliert wird.

2. System zur CO₂-Erfassung nach Anspruch 1, das weiterhin einen Wärmerückgewinnungsdampfgenerator (HRSG) (25) umfasst, der stromabwärts hinter dem ersten Reaktor (20) angeordnet ist, um von dort Wärme zu erhalten und zurückzugewinnen.

3. System zur CO₂-Erfassung nach einem der vorstehend aufgeführten Ansprüche, bei dem der erste Reaktor (20) so ausgeführt ist, dass er auf einen über dem Atmosphärendruck liegenden Druck beaufschlagt wird.

4. System zur CO₂-Erfassung nach einem der nachstehend aufgeführten Ansprüche, bei dem ein Teil des Rauchabgases stromabwärts hinter der Turbine (15) hinein in den Gasturbinenlufteinlass zurückgeführt und in einer Vorrichtung (10) gemischt wird, wobei ein Wärmerückgewinnungsdampfgenerator (HRSG) (18) stromaufwärts in einer solchen Rückführung angeordnet ist, dass Wärme von dort zurückgewonnen wird, und wobei ein Rauchgaskühler (17) stromabwärts hinter dem HRSG (18) angeordnet ist.

5. System zur CO₂-Erfassung nach Anspruch 1, bei dem das CO₂ durch das Feststoffmaterial adsorbiert oder absorbiert wird.

6. System zur CO₂-Erfassung nach einem der vorstehend aufgeführten Ansprüche, bei dem das Feststoffmaterial in Pulver- oder Partikelform verwendet wird.

7. System zur CO₂-Erfassung nach einem der vorstehend aufgeführten Ansprüche, bei dem es sich bei dem Feststoffmaterial um Calciumoxid (CaO) handelt.

8. System zur CO₂-Erfassung nach einem der vorstehend aufgeführten Ansprüche, bei dem der Reaktor so ausgeführt ist, dass er bei einer Temperatur von 400 bis 800°C, vorzugsweise von 600 bis 700°C und besonders bevorzugt bei 650°C arbeitet.

9. System zur CO₂-Erfassung nach einem der vorstehend aufgeführten Ansprüche, bei dem der zweite Reaktor so ausgeführt ist, dass er bei einer Temperatur von etwa 900°C arbeitet.

10. Verfahren zur CO₂-Erfassung in einem Gasturbinenenergieerzeugungssystem, das ein kombiniertes Kraftwerk (2) umfasst, wobei das Verfahren Folgendes umfasst:
Inkontaktbringen des CO₂ umfassenden Rauchgases mit Feststoffmaterial, das das im Rauchgas vorhandene CO₂ so erfassen kann, dass Metallkarbonat durch Karbonisieren gebildet wird;
Freisetzen von CO₂ durch Entkarbonisieren bei erhöhter Temperatur; und
Rezyklieren, wahlweise nach dem Abkühlen, eines Teils des CO₂-Stroms zu einem Einlass des kombinierten Kraftwerks.

11. Verfahren zur CO₂-Erfassung nach Anspruch 10, bei dem das CO₂ durch das Feststoffmaterial adsorbiert oder absorbiert wird.

12. Verfahren zur CO₂-Erfassung nach Anspruch 10 oder 11, bei dem das Feststoffmaterial in Pulver- oder Partikelform verwendet wird.

13. Verfahren zur CO₂-Erfassung nach einem der vorstehend aufgeführten Ansprüche 10 bis 12, bei dem es sich bei dem Feststoffmaterial um Calciumoxid (CaO) handelt.

14. Verfahren zur CO₂-Erfassung nach einem der vorstehend aufgeführten Ansprüche 10 bis 13, bei dem das CO₂ bei einer Temperatur von 400 bis 800°C, vorzugsweise 600 bis 700°C und besonders bevorzugt bei 650°C in Kontakt mit dem Feststoffmaterial gebracht wird.

15. Verfahren zur CO₂-Erfassung nach einem der vorstehend aufgeführten Ansprüche 10 bis 14, bei dem das Freisetzen von CO₂ bei einer Temperatur von etwa 900°C stattfindet.

16. Verfahren zur CO₂-Erfassung nach einem der vorstehend aufgeführten Ansprüche 10 bis 15, bei dem das Inkontaktbringen des CO₂ umfassenden Rauchgases mit Feststoffmaterial bei einem über dem Atmosphärendruck liegenden Druck erfolgt.

17. Verfahren zur CO₂-Erfassung nach einem der vorstehend aufgeführten Ansprüche 10 bis 16, das weiterhin Folgendes umfasst:
Rückführen eines Teils des Rauchabgases stromabwärts hinter der Turbine (15) des kombinierten Kraftwerks (2) hinein in einen Gasturbinenlufteinlass,
wobei ein Wärmerückgewinnungsdampfgenerator (HRSG) (18) stromaufwärts in einer solchen Rückführung angeordnet ist, dass Wärme von dort zurückgewonnen wird, wobei ein Rauchgaskühler (17) stromabwärts hinter dem HRSG (18) angeordnet ist.

## Revendications

1. Système pour capturer du CO₂ dans un système de génération de puissance 1 basé sur une turbine à gaz, le système comprenant une centrale électrique à cycle combiné 2 et une unité de bouclage de carbonate 3, dans lequel l'unité de bouclage de carbonate 3 comprend:
un premier réacteur 20 comprenant un matériau solide capable de capturer le CO₂ présent dans le gaz de fumée, de telle sorte qu'un carbonate de métal soit formé; et
un deuxième réacteur 30 qui est agencé pour libérer du CO₂ par décarbonation du carbonate de métal à température élevée,
dans lequel une partie du courant de CO₂ en provenance du deuxième réacteur 30 est recyclée, optionnellement après un refroidissement, vers l'entrée de la centrale électrique à cycle combiné 2.

2. Système de capture de CO₂ selon la revendication 1, comprenant en outre un générateur de vapeur à récupération de chaleur (HRSG) 25 qui est agencé en aval du premier réacteur 20 pour recevoir et récupérer de la chaleur à partir de celui-ci.

3. Système de capture de CO₂ selon l'une quelconque des revendications précédentes, dans lequel le premier réacteur 20 est adapté pour être pressurisé à une pression supérieure à la pression atmosphérique.

4. Système de capture de CO₂ selon l'une quelconque des revendications précédentes, dans lequel une partie du gaz de fumée d'échappement en aval de la turbine 15 est recyclée dans l'admission d'air de la turbine à gaz et est mélangée dans un dispositif 10, un générateur de vapeur à récupération de chaleur (HRSG) 18 est agencé en amont dans ce recyclage afin de récupérer de la chaleur à partir de celle-ci, et un refroidisseur de gaz de fumée 17 est agencé en aval du HRSG 18.

5. Système de capture de CO₂ selon la revendication 1, dans lequel le matériau solide capture le CO₂ par adsorption ou absorption.

6. Système de capture de CO₂ selon l'une quelconque des revendications précédentes, dans lequel le matériau solide se présente sous une forme pulvérulente ou particulaire.

7. Système de capture de CO₂ selon l'une quelconque des revendications précédentes, dans lequel le matériau solide est l'oxyde de calcium (CaO).

8. Système de capture de CO₂ selon l'une quelconque des revendications précédentes, dans lequel le réacteur est adapté pour fonctionner à une température comprise entre 400°C et 800°C, de préférence entre 600°C et 700°C, mieux encore de 650°C.

9. Système de capture de CO₂ selon l'une quelconque des revendications précédentes, dans lequel le deuxième réacteur est adapté pour fonctionner à une température d'environ 900°C.

10. Procédé pour capturer du CO₂ dans un système de génération de puissance basé sur une turbine à gaz comprenant une centrale électrique à cycle combiné 2, le procédé comprenant les étapes suivantes:
amener le gaz de fumée contenant du CO₂ en contact avec un matériau solide capable de capturer le CO₂ présent dans le gaz de fumée, de telle sorte que du carbonate de métal soit formé par carbonation;
libérer du CO₂ par décarbonation à température élevée; et
recycler une partie du courant de CO₂, optionnellement après un refroidissement, vers une entrée de la centrale électrique à cycle combiné.

11. Procédé de capture de CO₂ selon la revendication 10, dans lequel le matériau solide capture le CO₂ par adsorption ou absorption.

12. Procédé de capture de CO₂ selon la revendication 10 ou 11, dans lequel le matériau solide se présente sous une forme pulvérulente ou particulaire.

13. Procédé de capture de CO₂ selon l'une quelconque des revendications 10 à 12, dans lequel le matériau solide est l'oxyde de calcium (CaO).

14. Procédé de capture de CO₂ selon l'une quelconque des revendications 10 à 13, dans lequel le CO₂ est mis en contact avec le matériau solide à une température comprise entre 400°C et 800°C, de préférence entre 600°C et 700°C, mieux encore de 650°C.

15. Procédé de capture de CO₂ selon l'une quelconque des revendications 10 à 14, dans lequel la libération du CO₂ se produit à une température d'environ 900°C.

16. Procédé de capture de CO₂ selon l'une quelconque des revendications 10 à 15, dans lequel la mise en contact du gaz de fumée contenant du CO₂ avec un matériau solide est réalisée à une pression supérieure à la pression atmosphérique.

17. Procédé de capture de CO₂ selon l'une quelconque des revendications 10 à 16, comprenant en outre:
le recyclage d'une partie du gaz de fumée en aval de la turbine 15 de la centrale électrique à cycle combiné 2 dans une admission d'air de la turbine à gaz,
dans lequel un générateur de vapeur à récupération de chaleur (HRSG) 18 est agencé en amont dans ledit recyclage afin de récupérer de la chaleur à partir de celle-ci, et un refroidisseur de gaz de fumée 17 est agencé en aval du HRSG 18.
